Europäisches Patentamt

European Patent Office

Office européen des brevets

(11) Veröffentlichungsnummer: **0 235 183**
**B1**

(12) **EUROPÄISCHE PATENTSCHRIFT**

(45) Veröffentlichungstag der Patentschrift:
04.10.89

(51) Int. Cl.⁴: **F 16 D 3/18**, F 16 D 3/20

(21) Anmeldenummer: **86904787.8**

(22) Anmeldetag: **21.08.86**

(86) Internationale Anmeldenummer:
**PCT/DE 86/00337**

(87) Internationale Veröffentlichungsnummer:
**WO 87/01165 (26.02.87 Gazette 87/05)**

(54) **GELENKVERBINDUNG ZWISCHEN ZWEI WELLEN.**

(30) Priorität: 24.08.85 DE 8524285 U

(43) Veröffentlichungstag der Anmeldung:
09.09.87 Patentblatt 87/37

(45) Bekanntmachung des Hinweises auf die Patenterteilung:
04.10.89 Patentblatt 89/40

(84) Benannte Vertragsstaaten:
AT BE CH DE FR GB IT LI LU NL SE

(56) Entgegenhaltungen:
DE-B-1 172 488
DE-B-1 296 894
DE-B-1 728 574
DE-C-20 665
FR-A-1 410 767
GB-A-2 138 104
US-A-2 984 995

(73) Patentinhaber: TAUBERT, Hubert,
Wingertsbergstrasse 3, D-5450 Neuwied 23 (DE)

(72) Erfinder: TAUBERT, Hubert, Wingertsbergstrasse 3,
D-5450 Neuwied 23 (DE)

(74) Vertreter: Richter, Werdermann & Gerbaulet,
Neuer Wall 10, D-2000 Hamburg 36 (DE)

## Beschreibung

Die Erfindung betrifft eine Gelenkverbindung, die aus einem ersten Treib-Element am Ende einer ersten drehbaren Welle und einem zweiten Treib-Element am Ende einer zweiten drehbaren Welle besteht, welche Treibelemente verschwenkbar miteinander in Eingriff stehen derart, daß die Achsen der Wellen gegeneinander bis zu einem bestimmten Winkel schwenkbar sind, wobei das erste Treib-Element etwa die Form eines Hohlzylinders aufweist und an der Innenfläche, parallel zur Achse verlaufende, gleichmäßig am Umfang verteilte, abwechselnd konvexe und konkave, ineinander übergehende Vertiefungen und Erhöhungen aufweist, und daß das zweite Treib-Element etwa kugelförmig ausgebildet ist und an seiner Oberfläche abwechselnd Vertiefungen und Erhöhungen aufweist, die in Längsrichtung entsprechend einer, die Achse der zweiten Welle enthaltenen Ebene verlaufen und die in Umfangsrichtung, insbesondere in der Äquatorebene des kugelförmigen zweiten Treib-Elementes, einen zur Innenfläche des ersten Treib-Elementes etwa komplementären Verlauf aufweisen.

Bekannt sind Gelenkverbindungen, die aus einem ersten Treib-Element am Ende einer ersten drehbaren Welle und einem zweiten Treib-Element am Ende einer zweiten drehbaren Welle bestehen, welche Treib-Elemente verschwenkbar miteinander in Eingriff stehen derart, daß die Achsen der Wellen gegeneinander bis zu einem bestimmten Winkel schwenkbar sind. Derartige Gelenkverbindungen werden als Kardangelenk bezeichnet.

Zur Ausbildung einer derartigen Gelenkverbindung ist bereits vorgeschlagen worden, das erste Treibelement in etwa in Form eines Hohlzylinders auszubilden und an der Innenfläche mit parallel zur Achse verlaufenden gleichmäßig am Umfang verteilten, abwechselnd im wesentlichen konvexen und konkaven, ineinander übergehenden Vertiefungen und Erhöhungen zu versehen. Das zweite Treibelement ist dabei kugelähnlich ausgebildet und an seiner Oberfläche sind abwechselnd Vertiefungen und Erhöhungen vorgesehen, die in Längsrichtung entsprechend einer, die Achse der Welle des zweiten Treibelements enthaltene Ebene verlaufen und wobei die Zähne beider Teile an beiden Enden zugespitzt sind. In Umfangsrichtung betrachtet weisen die Erhöhungen und Vertiefungen des zweiten Treibelements im wesentlichen einen zur Innenfläche des ersten Treibelements komplementären Verlauf auf (DE-C-20 665)

Es ist dabei bekannt, für eine spielfreie Drehbewegungsübertragung in der Äquatorialebene der Gelenkverbindung einen komplementären Verlauf der Erhöhungen und Vertiefungen der beiden Treibelemente vorzusehen (FR-A-1 410 767), wobei auch bereits jeweils sechs Erhöhungen und Vertiefungen vorgesehen worden sind (GB-A-2 138 104).

Bei anderen Gelenkverbindungen ist es dabei schon vorgesehen worden, die Zahnbreite der zahnförmig ineinandergreifenden Elemente in Äquatorialrichtung zuzuspitzen (DE-B-1 296 894, DE-B-1 172 488), während es bei den gattungsgemäßen Gelenkverbindungen schon vorgesehen worden ist, durch mit zunehmendem Abstand von der Äquatorialzone schmaler werdende Zahnbreite eine Verschwenkung zu gewährleisten (DE-C-20 665).

Durch die Erfindung soll eine Gelenkverbindung der gattungsgemäßen Art so ausgebildet werden, daß sie aus einfachen Elementen aufgebaut ist, einen geringen Raumbedarf aufweist, einfach gekapselt werden kann, sowohl für große als auch für kleine Antriebsleistungen gut brauchbar ist und einen großen dreidimensionalen Schwenkwinkel aufweist.

Diese Aufgabe wird nach der Erfindung dadurch gelöst, daß bei einer Gelenkverbindung der eingangs angegebenen Art vorgesehen wird,

a) daß die Übergänge zwischen Vertiefungen und Erhöhungen stetig verlaufen,

b) daß auf dem kugelförmigen zweiten Treib-Element die Vertiefungen im Vergleich zu den Erhöhungen des ersten Treib-Elementes wenigstens zum Teil breiter bzw. die Erhöhungen gegenüber den Vertiefungen auf dem ersten Treib-Element wenigstens zum Teil schmäler ausgebildet sind,

c) daß auf dem kugelförmigen Treib-Element die Vertiefungen und die Erhöhungen in der Äquatorzone in ihrer Breite den zugeordneten Erhöhungen und Vertiefungen des ersten Treib-Elementes etwa entsprechen und mit zunehmender Entfernung von der Äquatorzone die Vertiefungen breiter und die Erhöhungen schmäler sind, und

d) daß der Mittelpunkt des Innenkreises, der mit dem Minimum der konkaven Vertiefung tangiert, um einen bestimmten Betrag unterhalb des Kugelmittelpunktes gestellt ist.

Die beiden Wellen sind bei einer solchen Gelenkverbindung aus einer Lage, in der sich die Achsen in Flucht befinden, in beliebiger Richtung in einem bestimmten Maße schwenkbar. Dabei ist das erste Treib-Element auf seiner Innenseite und das zweite kugelförmige Treib-Element auf seiner Außenseite mit je einem wellenlinienförmigen Profil versehen, daß somit, etwa in Achsrichtung betrachtet, aus rillenartigen Vertiefungen und stegartigen Erhöhungen besteht. Diese Rillen und Stege greifen, ähnlich wie die Zähne und Lücken bei einem Zahnantrieb, in bestimmten Bereichen der Kugeloberfläche ineinander, so daß die gewünschte Mitnahme erfolgt. Dabei ist es prinzipiell ohne Bedeutung, welches Treib-Element von der antreibenden Welle gedreht wird und welches Treib-Element die abgehende Welle antreibt.

Bei Schraubwerkzeugen ist eine derartige Kraftübertragung, bei der beide Treib-Elemente Zylinderform aufweisen aus der DE-PS-1 728 574 bekannt und unter dem Warenzeichen TORX auch im Handel erhältlich. Dabei wird durch die zylindrische Ausbildung beider Treib-Elemente sichergestellt, daß ein Schräghalten des Werkzeuges ausgeschlossen ist, die Achse der Schraube und des zugeordneten Werkzeuges (Schraubenschlüssel) in Flucht zueinander gehalten werden.

Somit ist eine Gelenkverbindung geschaffen worden, bei der die Achsen der beiden Wellen gegeneinander in bestimmtem Maße geschwenkt werden können. Bei dem Schwenken bzw. Kippen schneiden sich die Achsen der beiden Wellen etwa in der Mitte des kugelförmig ausgebildeten Teiles des zweiten Treib-Elementes. Wenn man diesen kugelförmigen Teil mit der Erdkugel vergleicht, wobei die Achse des Treib-Elementes mit der Erdachse übereinstimmt, verlaufen die rillenartigen Vertiefungen bzw. stegartigen Erhöhungen etwa entsprechend den Längengraden auf der Erdkugel, während die Innenfläche des ersten Treib-Elementes etwa entsprechend einer Umfangslinie der Kugel, die die Äquatorlinie schneidet, eingreift.

Vorzugsweise besitzen die Treib-Elemente je sechs Vertiefungen zwischen sechs Erhöhungen, wobei vorgesehen sein kann, daß die Mittelebene jeder Vertiefung bzw. Erhöhung die Drehachse des betreffenden Treib-Elementes enthält.

Die Übergänge zwischen den Vertiefungen und Erhöhungen verlaufen stetig, so daß alles abgerundet ist und scharfe Kanten vermieden werden. So wird erreicht, daß die Wellen leichtgängig gegeneinander geschwenkt werden können und die übertragene Kraft sich wenigstens nahezu auf die Schwenkung nicht auswirkt.

Die Vertiefungen auf dem kugelförmigen zweiten Treib-Element sind im Vergleich zu den Erhöhungen des ersten Treib-Elementes wenigstens zum Teil gleich breit oder breiter bzw. die Erhöhungen sind gegenüber den Vertiefungen aus dem ersten Treib-Element wenigstens zum Teil schmäler ausgebildet. Dadurch wird erreicht, daß das erforderliche Spiel vorhanden ist, damit beim Schwenken bzw. Kippen eine Klemmung vermieden wird. Aufgrund der schmäler werdenden Vertiefungen und Erhöhungen, ausgehend von der Äquatorzone des kugelförmigen Treib-Elementes zu den beiden Polen, sind die Achsen verschwenkbar miteinander im Eingriff.

Der dreidimensionale Schwenkwinkel der Kugel-Gelenk-Verbindung ergibt sich beim Kugel-Treibelement einerseits aus den schmäler werdenden Flankenwinkeln der Maxima der konvexen Erhöhung bzw. der gleich bleibenden oder größer werdenden Flankenwinkel der Minima der konkaven Vertiefung und ihrer Wendepunkte von der Äquatorebene zu den Pol-Kappen hin und andererseits beim Hohl-Treibelement durch die gleichbleibenden Flankenwinkel, die sich aus dem Maxima der konvexen Erhöhung und dem Minima der konkaven Vertiefung und deren Wendepunkte ergeben. Die Geometrie des Hohl-Treibelementes ist mit der Kugelgeometrie in ihrer Äquatorebene kongruent.

Der Umkreis im Maximum der konvexen Erhöhung und der Innenkreis im Minimum der konkaven Vertiefung sind bei den Treib-Elementen "TORX" mit A bzw. B definiert. Der konvexe Radius ist mit $F_{Rad}$ und der konkave Radius mit $E_{Rad}$ gegeben. Bei TORX ist $F_{Rad} < E_{Rad}$. Die Mittelpunkte dieser Radien liegen auf unterschiedlichen Kreisen. Die ineinander übergehenden konvexen und konkaven Radien bilden Wendepunkte, die zum Maximum der konvexen Erhöhung und zum Minimum der konkaven Vertiefung Winkel bilden, die als konvexe und konkave Flankenwinkel bezeichnet werden. Ausgehend von der Äquatorebene des kugelförmigen Treib-Elementes zu den beiden Polen werden die Erhöhungen schmäler bzw. die konvexen Flankenwinkel kleiner. Die konvexen und konkaven Flankenwinkel bilden im Übergang zu den Polen hin keine gemeinsame Tangente mehr, sondern zwei sich kreuzende Tangenten = Sprungfunktionen. Die Winkel vom Maximum und Minimum zu den Wendepunkten gehen in den Polen in eine vertikale Gerade über.

Aus fertigungstechnischen Gründen wird das kugelförmige Treib-Element nicht bis zum Nordpol bzw. zum Südpol ausgeprägt. Die Nord- und Süd-Kugelabschnitte entfallen, so daß eine Kugelschicht als Antrieb verbleibt.

Der dreidimensionale Schwenkwinkel ergibt sich einerseits aus dem Unterschied der Flächenwinkel $\gamma 1 + \gamma 2$ (im Bogenmaß) der Kugeldreiecke von Pol N zu den Wendepunkten A und B der konvexen und konkaven Radien bzw. aus den sich verjüngenden Flankenwinkeln der konvexen und konkaven Flanken vom Äquator zu den Polen des Kugelantriebs, andererseits aus den gleichbleibenden Flankenwinkeln des Hohl-Treibelementes und dem Spiel, das sich aus den Geometrien der beiden Treib-Elemente ergibt.

Die konvexen und die konkaven Radien des Hohl-Treibelementes verlaufen komplementär der Geometrie in der Äquatorebene des kugelförmigen Treib-Elementes.

Um dieses Spiel zu vergrößern bzw. wenn die antreibende und angetriebene Welle mit einem Gestell oder Gehäuse verbunden ist, das die Kugel weitgehend umschließt und natürlich ein Schwenkwinkel gegeben sein muß, wird der Mittelpunkt des Innenkreises, der mit dem Minimum der konkaven Vertiefung tangiert, um einen bestimmten Betrag außerhalb, d. h. oberhalb bzw. unterhalb des Kugelmittelpunktes gestellt.

Der Halbkreis bzw. die Halbkugel im Nordpol, geschlagen mit dem gleichen Radius des Innenkreises, erhält somit eine größere Differenz zwischen dem Umkreis bzw. Kugel-Außen-Ø im Nordpol und der kleineren Kugel im Nordpol, die sich aus dem neuen Innenkreis im Minimum der konkaven Vertiefung mit dem um den bestimmten Betrag unterhalb des Kugelmittelpunktes gestellten Mittelpunkt ergibt. Hierdurch verändern auch die Wendepunkte der konvexen und konkaven Radien ihre Lage in das Innere der Kugel. Somit werden die Winkel vom Maximum der konvexen Erhöhung bzw. vom Minimum der konkaven Vertiefung zu den Wendepunkten kleiner.

Der Mittelpunkt des Innenkreises für den Südpol wird um denselben bestimmten Betrag oberhalb des Kugelmittelpunktes gestellt. Der Halbkreis bzw. die Halbkugel im Südpol, geschlagen mit dem gleichen Radius des Innenkreises, erhält die gleich große Differenz zwischen dem Umkreis bzw. Kugel-Außen-Ø im Südpol und der kleineren Kugel im Südpol, wie die erarbeitete Kugel-Geometrie auf der nördlichen Halbkugel zeigt. Das Spiel dieser geschaffenen Antriebskugel gegenüber dem Hohlzylinder mit der komplementären Geometrie in der Äquatorebene des kugelförmigen Treib-Elementes oder dem Gestell, das die Kugel weitgehend umschließt und einen Innenkreis im Minimum der konkaven Vertiefung mit dem gleichen Mittelpunkt besitzt, ergibt den dreidimensionalen Winkel des Antrieb-Elementes, der beim Schwenken erzielt wird.

Die Funktionen berechnen sich aus den mathematischen Beziehungen des sphärischen Dreieckes und des schiefwinkligen Dreiecks

Nach einer besonderen Ausführungsform entsprechen auf dem kugelförmigen Treib-Element die Vertiefungen und Erhöhungen in der Äquatorzone in ihrer Breite den zugeordneten Erhöhungen bzw. Vertiefungen des ersten Treib-Elementes und mit zunehmender Entfernung von der Äquatorzone sind die Vertiefungen breiter und die Erhöhungen schmäler. Wenn die Innenseite des ersten Treib-Elementes die Kugeloberfläche in der Nähe der Äquatorzone berührt, entspricht die Teilung der Vertiefungen und Erhöhungen auf der Kugel genau derjenigen auf der Innenwand des zylindrischen ersten Treib-Elementes; die Gefahr einer Klemmung besteht somit nicht. Bei zunehmender Schwenkung kommt die zylindrische Innenfläche - wenigstens teilweise - mit einem Teil der Kugel in Eingriff, bei der die Rillen breiter bzw. die Stege schmaler werden, weshalb es in diesen Bereichen zweckmäßig sein kann, ein gewisses Spiel zuzulassen, wobei sich eine Verkleinerung der konvexen Flankenwinkel ergibt.

Ein Ausführungsbeispiel wird im folgenden anhand der Zeichnungen beschrieben:

Fig. 1 zeigt eine offene bzw. lösbare Gelenkverbindung,

Fig. 2 und 3 zeigen Teile der Gelenkverbindung, die miteinander fest verbunden werden können,

Fig. 4 zeigt eine Aufsicht auf die Teile der Teile der Fig. 3,

Fig. 5 zeigt eine Gelenkverbindung nach Fig. 3, in der zwei Stellungen der zweiten Welle mit dem daran angebrachten zweiten Treib-Element angedeutet sind, und

Fig. 6 zeigt eine Erläuterung der Erfindung an einer Kugelgeometrie.

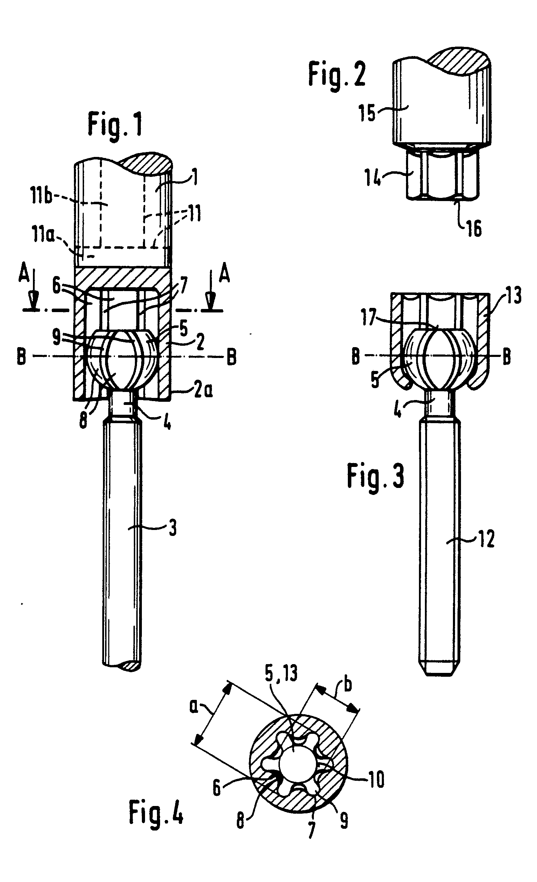

In Fig. 1 ist an einer ersten Welle 1 ein Kopfstück angebracht, das durch einen etwa hohlzylinderförmigen Teil 2 gebildet wird, der in Fig. 1 geschnitten dargestellt ist. Der Hohlzylinder 2 bildet das erste Treib-Element bzw. das zylindrische Hohl-Treibelement.

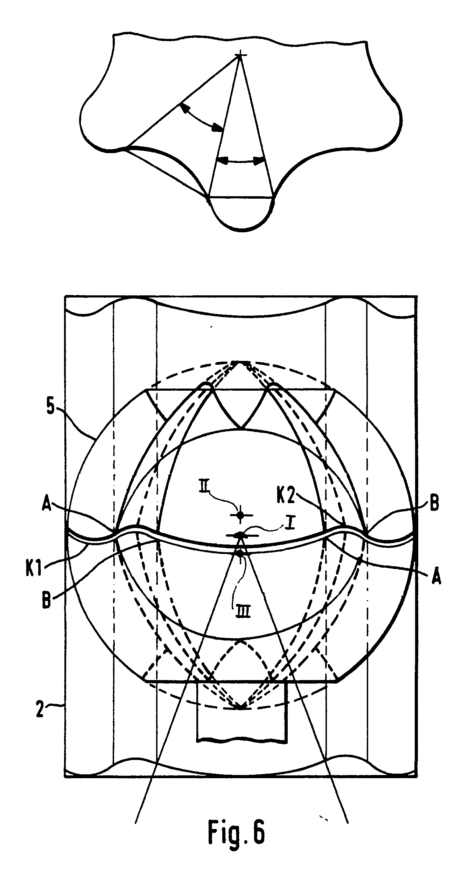

Im unteren Teil der Fig. 1 ist eine Welle 3 in Ansicht dargestellt, die an ihrem oberen Ende über einen Hals 4 mit einem kugelförmigen zweiten Treib-Element 5, dem Kugel-Treibelement, verbunden ist. Beide Treib-Elemente 2 und 5 korrespondieren in der Äquatorebene der Torx-Geometrie (Fig. 6)

Das zylindrische Hohl-Treibelement 2 ist in Fig. 4 entsprechend der Linie A-A geschnitten in Aufsicht dargestellt. Es weist an seiner Innenseite, gleichmäßig um die Längsachse verteilt, sechs etwas verbreitete Erhöhungen 6 auf, zwischen denen in gleicher Weise regelmäßig angeordnet sechs schmälere Vertiefungen 7 liegen. Im Vergleich zu einer kreisförmigen Umfangslinie wird somit ein wellenförmiges Profil gebildet, das sich vom äußeren Rand 2a des Hohl-Treibelementes 2 achsparallel nach innen erstreckt.

Dabei weisen gegenüberliegende Teile der Vertiefungen 7 einen Abstand a und die gegenüberliegenden Stellen der Erhöhungen 6 einen entsprechend kleineren Abstand b auf.

Das Kugel-Treibelement 5 an der zweiten Welle 3 trägt breitere Vertiefungen 8, zwischen denen schmälere Erhöhungen 9 liegen. Im Schnitt A-A gemäß Fig. 4 ist zu entnehmen, daß der Äquator des Kugel-Treib-Elementes 5 und des Hohl-Treibelementes 2 sich in der in Fig. 1 mit B-B dargestellten Ebene berühren, da im Äquatorbereich des Kugel-Treibelementes 5 seine Vertiefungen 8 und Erhöhungen 9 einen zu den Erhöhungen 6 und Vertiefungen 7 an der Innenfläche des Hohl-Treibelementes 2 etwa komplementären Verlauf verweisen. Wie Fig. 1 zeigt, ist die obere Pol-Kappe des Kugel-Treibelementes 5 senkrecht zur Achse der Welle 3 abgeschnitten, so daß in Fig. 4 eine Kreislinie 10 sichtbar wird, zu der hin die Vertiefungen und Erhöhungen der Kugeloberfläche auslaufen.

Im Ausführungsbeispiel nach Fig. 1 ist die Welle 1 mit dem Hohl-Treibelement 2 auf das Kugel-Treibelement 5 der Welle frei aufsteckbar. Wenn also beide Wellen in der dargestellten Position durch Lagerung gegen axiale Verschiebungen gesichert sind, kann die so dargestellte Gelenkverbindung ohne weitere Teile Verwendung finden.

Eine Gelenkverbindung nach Fig. 1 kann auch als Schraube und Schlüssel Verwendung finden. So kann am Hohl-Treibelement 2 entsprechend der gestrichelten Linie 11 ein Schraubenkopf 11a mit einem Schraubenschaft 11b verbunden sein; die Welle 3 gehört dann gewissermaßen zu einem Schraubenschlüssel, der mit dem kugelförmig ausgebildeten Treib-Element 5 die Schraube 11a, 11b drehen kann. Infolge der kugelförmigen Ausbildung kann ein solcher Schraubenschlüssel leicht in den zylindrischen Teil des Hohl-Treibelementes 2 eingeführt werden und während des Schraubens braucht die Achse des Schraubenschlüssels nicht mit der Achse der Schraube in Flucht zu liegen. So lassen sich schwerer zugängliche Schraubenköpfe leichter betätigen, auch dann, wenn das Gesichtsfeld bei der Betätigung eingeschränkt ist.

Zweckmäßig sind auf dem Kugel-Treibelement 5 die Vertiefungen 8 im Vergleich zu den Erhöhungen 6 des Hohl-Treibelementes 2 mit zunehmender Entfernung von der Äquatorzone des kugelförmigen Teils, also zu den Polen hin, breiter bzw. die etwa stegförmigen Erhöhungen 9 werden gegenüber den etwa rillenförmigen Vertiefungen 7 auf der Innenfläche des ersten Treib-Elementes 2 schmäler. Dadurch wird erreicht, daß auch bei einem etwas größeren Schwenken der Wellen 1 und 3 gegeneinander eine Verklemmung zwischen den beiden Treib-Elementen vermieden wird.

Der dreidimensionale Schwenkwinkel der Kugel-Gelenk-Verbindung ergibt sich beim Kugel-Treibelement einerseits aus den schmäler werdenden Flankenwinkeln der Maxima der konvexen Erhöhung bzw. breiter werdenden Flankenwinkel der Minima der konkaven Vertiefung und ihrer Wendepunkte von der Äquatorebene zu den Pol-Kappen hin und andererseits beim Hohl-Treibelement durch die gleichbleibenden Flankenwinkel, die sich aus dem Maxima der konvexen Erhöhung und dem Minima der konkaven Vertiefung und deren Wendepunkte ergeben. Die Geometrie des Hohl-Treibelementes ist mit der Kugelgeometrie in ihrer Äquatorebene kongruent.

Fig. 2 zeigt eine Ausführungsform, bei der das Kugel-Treibelement 5 ebenso ausgebildet ist wie in Fig. 1; es ist jedoch nicht mit einer runden Welle, sondern mit einem Schaftstück 15 verbunden, das z. B. eine Vierkant- oder Sechskantoberfläche aufweist und in irgendeiner Weise, z. B. durch Klemmen, mit einem Antrieb verbunden sein kann.

Das Hohl-Treibelement ist hierbei als ein nach oben offener Hohlzylinder 13 ausgebildet, der auf seiner Innenseite die gleiche wellenförmige Profilierung trägt, wie sie anhand der Fig. 1 und 4 beschrieben wurde.

Der in Fig. 4 dargestellte Schnitt A-A von Fig. 1 stimmt hier in Ansicht und Umrißlinien mit der Aufsicht auf Fig. 3 überein, wobei an die Stelle des Schnittes durch das Hohl-Treibelement 2 die Aufsicht auf das Treib-Element 13 tritt.

Das zylindrische Hohl-Treibelement 13 ist gemäß Fig. 3 an einem unteren Ende nach innen umgebördelt und greift somit hinter das Kugel-Treibelement 5 derart, daß dieses aus dem Treib-Element 13 nicht herausgezogen werden kann. Auf dem oberen Ende des Elementes 13 kann ein Kupplungsstück 14 zu einer Welle 15 mit einem zur Innenfläche des Treib-Elementes 13 komplementären zylindrischen Oberfläche hineingeschoben und befestigt werden. Vor der unteren Fläche 16 des Teiles 14 und der Oberfläche 17 des Kugel-Treibelementes 5 muß dabei ausreichend Raum bleiben, um ein Schwenken der Kugel zuzulassen. Die Teile 13 und 14 wirken dabei zusammen wie eine bekannte Kopf- und Schlüsselausbildung nach der DE-PS-1 728 574.

In einer gemäß Fig. 2 und 3 zusammengesetzten Gelenkverbindung können die antreibende Welle 12 oder 15 und die angetriebene Welle 15 oder 12 sich nicht voneinander entfernen und das erste Treib-Element 13 wirkt als Gestell oder Gehäuse, das die Kugel 5 weitgehend umschließt; dadurch wird dem Eindringen von Schmutz entgegengewirkt.

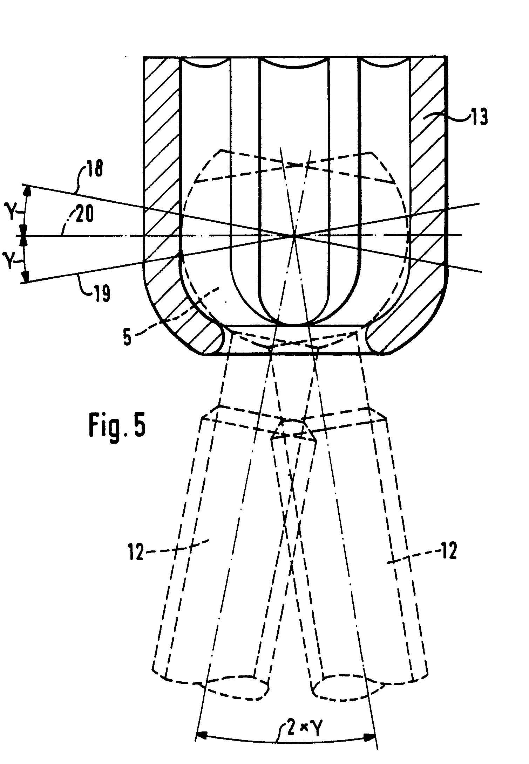

Fig. 5 zeigt in vergrößertem Maßstab das Treib-Element 13 nach Fig. 3, das das Kugel-Treibelement 5 umfaßt, das gestrichelt in zwei Richtungen aus der fluchtenden Lage gegenläufig um einen Winkel γ verschwenkt ist. Diese in Fig. 5 in der Zeichenebene dargestellte Verschwenkung kann natürlich in allen Richtungen, also auch nach oben und unten, erfolgen.

Durch Linien 18 und 19 sind die mittleren Ebenen der Kugel 5 dargestellt, die nach oben bzw. nach unten um den Winkel γ gegenüber der Lage nach der Linie 20 verschwenkt sind, welche Linie 20 der Lage bei fluchtenden Achsen entspricht.

Eine Gelenkverbindung nach der Erfindung hat somit fünf Freiheitsgrade, nämlich zwei für die Drehrichtungen und drei für den dreidimensionalen Winkel γ. Es wird somit eine sichere Kupplung zwischen zwei Wellen erreicht, auch unabhängig davon, welche Welle als Antrieb dient und welche Welle den Abtrieb darstellt. Durch die formschlüssige Verbindung zwischen den profilierten Oberflächen wird die spezifische Belastung der Werkstoffe vermindert, so daß eine Verformung, insbesondere durch Scherkräfte, wie sie bei normalen Sechskant-Schlüssel-Anordnungen auftreten kann, vermieden wird.

Aufgrund der erfindungsgemäßen Ausgestaltung ist eine dreidimensionale Verschwenkbarkeit zwischen dem Hohl-Treibelement 2 und dem Kugel-Treibelement 5 gegeben, wobei das Kugel-Treibelement 5 aus Kugelkreisen besteht, die den A- und B-Punkten eines TORX entspricht, wobei A und B in gleicher Mittelpunktebene liegen (Fig. 6). Der dreidimensionale Schwenkwinkel ergibt sich dabei aus den kleiner werdenden konvexen (K1) und konkaven (K2) Winkeln am Kugel-Treibelement 5 gegenüber den gleichbleibenden konvexen und konkaven Winkeln an dem Hohl-Treibelement 2. Der Mittelpunkt (II, III) des jeweiligen Innenkreises, der mit dem Minimum der konkaven Vertiefung tangiert, ist dabei je nach Halbkugel um einen bestimmten Betrag unterhalb bzw. oberhalb des Kugelmittelpunktes (I) gestellt.

## Patentansprüche

1. Gelenkverbindung, die aus einem ersten Treib-Element (2) am Ende einer ersten drehbaren Welle (1) und einem zweiten Treib-Element (5) am Ende einer zweiten drehbaren Welle (3) besteht, welche Treib-Elemente (2, 5) verschwenkbar miteinander in Eingriff stehen derart, daß die Achsen der Wellen (1, 3) gegeneinander bis zu einem bestimmten Winkel schwenkbar sind, wobei das erste Treib-Element (2) etwa die Form eines Hohlzylinders aufweist und an der Innenfläche, parallel zur Achse verlaufende, gleichmäßig am Umfang verteilte, abwechselnd konvexe und konkave, ineinander übergehende Vertiefungen (7) und Erhöhungen (6) aufweist, und daß das zweite Treib-Element (5) etwa kugelförmig ausgebildet ist und an seiner Oberfläche abwechselnd Vertiefungen (8) und Erhöhungen (9) aufweist, die in Längsrichtung entsprechend einer, die Achse der zweiten Welle (3) enthaltenen Ebene verlaufen und die in Umfangsrichtung, insbesondere in der Äquatorebene des kugelförmigen zweiten Treib-Elementes (5), einen zur Innenfläche des ersten Treib-Elementes (2) etwa komplementären Verlauf aufweisen, dadurch gekennzeichnet,

a) daß die Übergänge zwischen Vertiefungen (7, 8) und Erhöhungen (6, 9) stetig verlaufen,

b) daß auf dem kugelförmigen zweiten Treib-Element (5) die Vertiefungen (8) im Vergleich zu den Erhöhungen (6) des ersten Treib-Elementes (2) wenigstens zum Teil breiter bzw. die Erhöhungen (9) gegenüber den Vertiefungen (7) auf dem ersten Treib-Element (2) wenigstens zum Teil schmäler ausgebildet sind,

c) daß auf dem kugelförmigen Treib-Element (5) die Vertiefungen (8) und die Erhöhungen (9) in der Äquatorzone (B-B) in ihrer Breite den zugeordneten Erhöhungen (6) bzw. Vertiefungen (7) des ersten Treib-Elementes (2) etwa entsprechen und mit zunehmender Entfernung von der Äquatorzone die Vertiefungen (8) breiter und die Erhöhungen (9) schmäler sind, und

d) daß der Mittelpunkt (II, III) des Innenkreises, der mit dem Minimum der konkaven Vertiefung tangiert, je nach Halbkugel um einen bestimmten Betrag unterhalb bzw. oberhalb des Kugelmittelpunktes (I) gestellt ist.

2. Gelenkverbindung nach Anspruch 1, dadurch gekennzeichnet, daß die Treib-Elemente (2, 5) je sechs Vertiefungen (7 bzw. 8) zwischen sechs Erhöhungen (6 bzw. 9) besitzen.

3. Gelenkverbindung nach Anspruch 1 dadurch gekennzeichnet, daß die Mittelebene (Symmetriebene) jeder Vertiefung (7, 8) bzw. Erhöhung (6, 9) die Drehachse des betreffenden Treib-Elementes enthält.

## Claims

1. Articulated joint comprising a first drive member (2) on the end of a first rotatable shaft (1) and a second drive member (5) on the end of a second rotatable shaft (3), said drive members (2, 5) being swivellably interengaged in such a way that the axes of the shafts (1, 3) are swivellable relative to one another up to a certain angle, with the first drive member (2) having the approximate shape of a hollow cylinder and, on the inner surface, is provided with recesses (7) and elevations (6) merging into one another which extend parallelly to the axis and are uniformly distributed on the circumference and alternately convex and concave, and that the second drive member (5) is constructed approximately spherically and, on its surface, is provided alternately with recesses (8) and elevations (9) which extend in the longitudinal direction in accordance with a plane comprising the axis of the second shaft (3) and which, in the circumferential direction, particularly within the equatorial plane of the spherical second drive member (5), extend, relative to the internal surface of the first drive member (2), approximately complementarily, characterized in that

a) the transitional areas between the recesses (7, 8) and the elevations (6, 9) extend in a uniform manner;

b) on the spherical second drive member (5), the recesses (8), in comparison with the elevations (6) of the first drive member (2), are, at least in part, constructed so as to be wider, or the elevations (9) are, as compared to the recesses (7) on the first drive member (2), at least in part, constructed so as to be narrower;

c) on the second spherical drive member (5), the recesses (8) and the elevations (9) within the equatorial zone (B-B), in their width, correspond approximately to the allocated elevations (6) or recesses (7) of the first drive member (2) and, with increasing distance from the equatorial zone, the recesses (8) are wider and the elevations (9) narrower, and in that

d) the central point (II, III) of the inner circle that is tangential to the minimum of the concave recess is, dependent on the hemisphere, placed by a certain value below or above the central point of the sphere (I).

2. Articulated joint according to the Claim 1, characterized in that the drive members (2, 5) are provided with six recesses (7 or 8) each between six elevations (6 or 9).

3. Articulated joint according to Claim 1, characterized in that the central plane (plane of symmetry) of each recess (7, 8) or elevation (6, 9) comprises the axis of rotation of the drive member in question.

## Revendications

1. Liaison articulée entre deux arbres qui comprend un premier élément moteur (2) à l'extrémité d'un premier arbre rotatif (1) et un second élément moteur (5) à l'extrémité d'un second arbre rotatif, lesquels éléments moteurs (2, 5) sont en prise l'un avec l'autre de manière pivotante de façon telle que les axes des arbres (1, 3) sont pivotants l'un par rapport à l'autre jusqu'à un certain angle, le premier élément moteur (2) présentant approximativement la forme d'un cylindre creux et présentant sur sa face intérieure des bosses (7) et des creux (6), convexes et concaves en alternance, s'enchaînant les uns dans les autres, allant parallèlement au sens de l'axe, répartis de manière régulière sur la périphérie et que le second élément moteur (5) est configuré de forme à peu près sphérique et qu'il présente en alternance sur sa surface des creux (8) et des bosses (9) qui vont dans le sens longitudinal conformément à un plan qui contient l'axe du second arbre (3) et qui présentent dans le sens de la périphérie, en particulier dans le plan équatorial du second élément moteur (5) de forme sphérique une configuration à peu près complémentaire à celle de la face intérieure du premier élément moteur (2), caractérisée en ce

a) que les transitions entre les creux (7, 8) et les bosses (6, 9) sont continues,

b) que les creux (8) du second élément moteur (5) de forme sphérique sont configurés de manière à être plus larges au moins en partie que les bosses (6) du premier élément moteur (2) et/ou que les bosses (9) sont configurées de manière à être plus étroites au moins en partie par rapport aux creux (7) du premier élément moteur (2),

c) que les creux (8) et les bosses (9) situés dans la zone équatoriale (B-B) de l'élément moteur de forme sphérique (5) correspondent en largeur à peu près aux bosses (6) ou aux creux (7) correspondants du premier élément moteur (2) et que, plus on s'éloigne de la zone équatoriale, plus les creux (8) sont larges et les bosses (9) étroites et

d) que le centre (II, III) du cercle intérieur qui est tangent avec le minimum du creux concave se trouve, selon l'hémisphère, à une certaine distance au-dessous ou au-dessus du centre de la sphère (I).

2. Liaison articulée selon la revendication 1, caractérisée en ce que les éléments moteurs (2, 5) possèdent chacun six creux (7 ou 8) entre six bosses (6 ou 9).

3. Liaison articulée selon la revendication 1, caractérisée en ce que le plan médian (plan de symétrie) de chaque creux (7, 8) ou bosse (6, 9) contient l'axe de rotation de l'élément moteur concerné.

**Fig.2**

15

14

16

**Fig.1**

11b
11
11a

A — A

6 7

9 5
2

B — B

2a

8 4

3

**Fig.3**

13

17

5

B — B

4

12

5,13

a b

6 10

8 7 9

**Fig.4**

1

Fig. 5

Fig. 6